(19) Europäisches Patentamt / European Patent Office / Office européen des brevets

(11) **EP 4 715 941 A1**

(12) **EUROPEAN PATENT APPLICATION**
published in accordance with Art. 153(4) EPC

(43) Date of publication:
25.03.2026 Bulletin 2026/13

(21) Application number: 24852385.4

(22) Date of filing: 09.08.2024

(51) International Patent Classification (IPC):
$H01M\ 10/0568^{(2010.01)}$  $H01M\ 10/0567^{(2010.01)}$
$H01M\ 10/0525^{(2010.01)}$  $C08F\ 22/10^{(2006.01)}$
$C08F\ 2/44^{(2006.01)}$  $C08K\ 3/22^{(2006.01)}$

(52) Cooperative Patent Classification (CPC):
C08F 2/44; C08F 22/10; C08K 3/22;
H01M 10/0525; H01M 10/0567; H01M 10/0568;
Y02E 60/10

(86) International application number:
PCT/KR2024/011841

(87) International publication number:
WO 2025/034032 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.08.2023 KR 20230104172
08.08.2024 KR 20240105886

(71) Applicant: LG Energy Solution, Ltd.
Seoul 07335 (KR)

(72) Inventors:
• HWANG, Sunwook
  Daejeon 34122 (KR)
• HAN, Hyea Eun
  Daejeon 34122 (KR)
• KIM, Dong Kyu
  Daejeon 34122 (KR)

(74) Representative: Goddar, Heinz J.
Boehmert & Boehmert
Anwaltspartnerschaft mbB
Pettenkoferstrasse 22
80336 München (DE)

(54) **COMPOSITE ELECTROLYTE MEMBRANE, MANUFACTURING METHOD THEREOF, AND LITHIUM SECONDARY BATTERY COMPRISING SAME**

(57) A composite electrolyte membrane includes : (1) a liquid electrolyte; (2) a crosslinked polymer of a monomer having a curable functional group; and (3) oxide nanoparticles dispersed in the crosslinked polymer and having a particle size of 300 nm or less. The oxide nanoparticles include at least one compound particle selected from the a lithium-containing oxide or a lithium-containing phosphate. A method for manufacturing the composite electrolyte membrane is disclosed. A lithium secondary battery includes: (1) a positive electrode; (2) a negative electrode; and (2) the composite electrolyte membrane interposed between the positive electrode and the negative electrode. The composite electrolyte membrane may be coated onto the negative electrode, or may be separably interposed between the positive electrode and the negative electrode.

FIG. 1

EP 4 715 941 A1

**Description**

**[TECHNICAL FIELD]**

CROSS-REFERENCE TO RELATED APPLICATION DATA

This application claims priority to Korean Patent Application No. 10-2023-0104172 filed on August 9, 2023 and Korean Patent Application No. 10-2024-0105886 filed on August 8, 2024, all of which are incorporated herein by reference in their entirety.

TECHNICAL FIELD

The present disclosure relates to a composite electrolyte membrane, a manufacturing method thereof, and a lithium secondary battery comprising the same.

**(BACKGROUND)**

Recently, with the rapid spread of electronic devices using batteries such as mobile phones, notebook computers, and electric vehicles, there is a rapid increase in demand for secondary batteries that are small and light and also have relatively high capacity. In particular, lithium secondary batteries are in the spotlight as a power source for operating portable devices because they are lightweight and have high energy density. Accordingly, efforts for research and development to enhance the performance of lithium secondary batteries are being actively conducted.

Liquid electrolytes or polymer electrolytes are currently used in such lithium secondary batteries, such as lithium ion batteries(LIBs) and lithium metal batteries(LMBs). Particularly, in the case of lithium secondary batteries currently on the market, liquid electrolytes are mostly used as electrolytes, and such liquid electrolytes have an ionic conductivity of about $10 \times 10^{-3}$ $Scm^{-1}$. However, the ionic conductivity value is not the ionic conductivity of pure cations only, but corresponds to the measured value of the ionic conductivity including anions. For this reason, the cation transference number, which can calculate the contribution of pure ionic conductivity of cations only, corresponds to another important performance index of the electrolyte. On the other hand, it is known that when the cation transference number is 1, concentration polarization does not occur theoretically even if the ionic conductivity is low, and it is known in many literatures that the cation transference number of the liquid electrolyte widely used currently is about 0.3. The task of enhancing the cation transference number to enhance the performance of lithium secondary batteries falls under a subject that has consistently been challenged from the electrolyte perspective.

**[DETAILED DESCRIPTION OF THE INVENTION]**

**[Technical Problem]**

Thus, the present inventors attempts to apply various oxide-based nanoparticles to electrolyte membranes, thereby ensuring a high cation transference number, and contributing to enhancement of the performance of a lithium secondary battery using the same.

**[Technical Solution]**

Hereinafter, a composite electrolyte membrane, and the like according to specific aspects of the present disclosure will be described.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments but not to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

**Composite electrolyte membrane**

According to an aspect of the present disclosure, there is provided a composite electrolyte membrane comprising: a liquid electrolyte; a crosslinked polymer of a monomer having curable functional group; and oxide nanoparticles dispersed on the crosslinked polymer and having a particle size of 300 nm or less, wherein the oxide nanoparticles include at least one compound particle selected from the group consisting of a lithium-containing oxide and a lithium-containing phosphate.

The composite electrolyte membrane comprises a crosslinked polymer obtained by curing a monomer having curable functional group (e.g., ethylenically unsaturated bond, etc.) by a method such as thermal curing, and also may comprise a liquid electrolyte contained in the crosslinked polymer and oxide nanoparticles dispersed on the crosslinked polymer and having a particle size of 300 nm or less.

Since the composite electrolyte includes a liquid electrolyte, for example, an electrolyte containing a non-aqueous organic solvent and a lithium salt, within a crosslinked structure of the crosslinked polymer, it can exhibit excellent mechanical properties even without a separate separation membrane, thereby minimize the risk of ignition, etc. caused by the generation of leakage of the liquid electrolyte, etc.

In addition, since the oxide nanoparticles, particularly oxide nanoparticles whose particle size and/or content range are optimized, are further included in the crosslinked polymer, it is possible to exhibit further improved cation transference number characteristics. This can be predicted because the particle size and content of the oxide nanoparticles are optimized, and thus these particles can be more uniformly dispersed in the crosslinked polymer and the liquid electrolyte, and as a result, the cation transference number characteristics due to the liquid electrolyte and oxide nanoparticles are maximized and furthermore, the performance of the lithium secondary battery using the same can also be further improved.

Meanwhile, the liquid electrolyte contained in the crosslinked polymer may include a non-aqueous organic solvent and a lithium salt. Such a non-aqueous organic solvent can maintain a liquid state within the crosslinked structure of the crosslinked polymer, or a part thereof can be cured together with the crosslinked polymer to further improve the mechanical properties of the composite electrolyte. Such a non-aqueous organic solvent can dissociate a lithium salt in the crosslinked polymer and act as an ion transfer medium. Therefore, this liquid electrolyte is included within the crosslinked polymer, so that the composite electrolyte can exhibit superior ion conductivity compared to a solid-state polymer solid electrolyte.

The kind of a non-aqueous organic solvent that can be used herein is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Moreover, the sulfone-based solvent may include dimethyl sulfone, ethylmethyl sulfone, sulforane, or the like.

However, in terms of superior mechanical properties and safety, etc. of the composite electrolyte membrane, it is preferable to use, as the organic solvent, a carbonate-based solvent, a sulfone-based solvent, or a phosphate-based solvent that can be at least partially cured together with the crosslinked polymer and can exhibit flame retardant properties. Further, as the organic solvent, it is more preferable to use a solvent that exhibits low volatility under curing conditions for forming the crosslinked polymer, for example, under thermal curing conditions of 60 to 80°C.

Meanwhile, as the lithium salt dissolved or dispersed in the organic solvent, any lithium salt that has been previously known to be applicable to the electrolyte of a lithium secondary battery, for example, at least one selected from the group consisting of LiFSI(lithium bis(fluorosulfonyl)imide), LiTFSI (lithium bis(trifluoromethanesulfonyl)imide), LiCl, LiBr, LiI, $LiClO_4$, $LiBF_4$, $LiPF_6$, $LiB_{10}Cl_{10}$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(C_2F_5SO_2)_2NLi$, $(CF_3SO_2)_3CLi$, chloroborane lithium, lithium lower aliphatic carboxylate having 4 or less carbon atoms, lithium 4-phenyl borate and lithium imide may be used.

This lithium salt may be included in the organic solvent of the liquid electrolyte at a concentration of 0.8 M to 4.0 M, or 1.0 M to 2.0 M, so that the composite electrolyte membrane of one aspect can exhibit excellent thermal stability and ionic conductivity.

In an exemplary embodiment, the composite electrolyte membrane may include a crosslinked polymer including the liquid electrolyte, and oxide nanoparticles in a crosslinked structure which will be described later. Such a crosslinked polymer may be a crosslinked polymer in which a multifunctional monomer having a plurality of curable unsaturated bonds, such as a (meth)acrylate group, an alkoxylate group, a hydroxyl group, a cyano group, or a carboxylic acid group, is thermally cured.

Since the liquid electrolyte is included within the crosslinked structure of the crosslinked polymer, the composite electrolyte membrane not only exhibits excellent mechanical properties even without a separate separation membrane, but also can suppress liquid leakage and further improve the safety of the lithium secondary battery.

More specific examples of the curable monomer for forming the crosslinked polymer include at least one selected from the group consisting of: ethylene glycol diacrylate, triethylene glycol diacrylate, ethoxylate trimethylolpropane triacrylate, bisphenol A ethoxylate dimethacrylate, acrylic acid, carboxyethylacrylate, methyl cyanoacrylate, ethylcyanoacrylate, ethylcyano ethoxyacrylate, cyanoacrylic acid, hydroxyethyl methacrylate, and hydroxypropyl acrylate. The crosslinked polymer may be a single polymer in which one selected among them is cured, or a copolymer in which two or more selected among them are cured.

This crosslinked polymer may be included in an amount of 3 to 20% by weight, or 5 to 15% by weight based on the total weight of the composite electrolyte membrane. Thereby, the composite electrolyte membrane of one aspect can exhibit superior mechanical properties, and thus can more effectively suppress leakage, etc. and also can uniformly contain and disperse the liquid electrolyte and oxide nanoparticles on the crosslinked polymer to exhibit further improved ionic conductivity.

**Oxide nanoparticles**

Meanwhile, the composite electrolyte membrane according to an exemplary aspect may further include oxide nanoparticles having a particle size of 300 nm or less, for example, 100 to 300 nm, and dispersed on the crosslinked polymer so as to exhibit a further improved cation transference number.

Further, as can be confirmed from the following embodiments, as the particle size range and/or content range of the oxide nanoparticles are optimized, the composite electrolyte membrane of one aspect can exhibit further improved cation transference number characteristics. On the other hand, if the particle size range of the oxide nanoparticles becomes excessively large, e.g., 300 nm or more, or becomes excessively small, e.g., less than 100 nm, the oxide nanoparticles may not be uniformly dispersed, which may degrade the characteristics of the composite electrolyte membrane and may deteriorate the ionic conductivity of the composite electrolyte.

In an exemplary embodiment, the oxide nanoparticles may include particles of at least one compound selected from the group consisting of lithium-containing oxides and lithium-containing phosphates. For example, the lithium-containing oxide or lithium-containing phosphate may include at least one selected from the group consisting of: $Li_2O$, LAGP(lithium aluminum germanium phosphate)-based compound, LLZO(lithium lanthanum zirconium oxide)-based compound, LATP(lithium aluminum titanium phosphate)-based compound, LLZTO(lithium lanthanum zirconium tantalum oxide)-based compound, LSTP(lithium silicon titanium phosphate)-based compound, and lithium oxides (e.g., $Li_2O$).

For example, the cation transference number can be further improved by using the particles of the LATP (lithium aluminum titanium phosphate) compound or the $Li_2O$-based particles, and thus the performance of the lithium secondary battery using the same can also be further improved.

In addition, the oxide nanoparticles may be included in an amount of 5 to 50% by weight based on the total weight of the composite electrolyte membrane. Preferably, the oxide nanoparticles may be included in an amount of 10 to 30% by weight based on the total weight of the composite electrolyte membrane. If the content of the oxide nanoparticles is too small, it is not possible to exhibit the effect of increasing the cation transference number in the composite electrolyte membrane, and if the content thereof is too large, it is possible to significantly affect the physical properties of the composite electrolyte membrane itself.

**Method for manufacturing composite electrolyte membrane**

In another aspect according to the present disclosure, there is provided a method for manufacturing the above-mentioned composite electrolyte membrane, the method comprising the steps of: forming a composition on a substrate, the composition comprising a liquid electrolyte, a lithium salt, a monomer having curable functional group, and lithium-containing oxide particles or lithium-containing phosphorus oxide particles having a particle size of 300 nm or less; and thermally curing the monomer of the composition at 60°C or more or photocuring it under ultraviolet irradiation, in the presence of an initiator.

According to the manufacturing method, a composite electrolyte exhibiting excellent mechanical properties and a cation transference number can be manufactured by a simple method of mixing each component of a composite electrolyte membrane of one aspect and thermally curing the monomer in the presence of a thermal initiator or the like. Furthermore, in this manufacturing method, since the composite electrolyte membrane is manufactured by thermal curing at a temperature of about 60 to 80°C, the phenomenon of evaporation of the organic solvent, and the like contained in the liquid electrolyte during the manufacturing process can be reduced, and a composite electrolyte membrane having superior characteristics can be manufactured.

Meanwhile, according to an aspect of the method for manufacturing the composite electrolyte membrane, the above-mentioned organic solvent and lithium salt are mixed to previously form a liquid electrolyte, and a monomer having curable functional group, an oxide nanoparticle having a particle size of 300 nm or less, and a thermal initiator are added simultaneously or sequentially to the liquid electrolyte and mixed, and then such a composition is coated onto the substrate, and heat-treated and cured, thereby manufacturing the above-mentioned composite electrolyte membrane.

In this case, the curing process, etc. may be performed on a separate porous separation membrane or a positive electrode or a negative electrode, or may be performed on a separate substrate prepared in advance, for example, a resin substrate such as polyester such as PET. Depending on the type of each substrate on which the curing process is performed, the composite electrolyte membrane may be manufactured in the form coated onto the separator, the form overcoated and attached to each electrode, or may be manufactured in the form of a free-standing film itself, and may be applied as an electrolyte membrane that replaces the porous separator of a lithium secondary battery.

In addition, the composition may be coated onto the substrate according to a coating method of a general liquid composition, and the curing process may vary according to specific components of the composition, but may be performed by heat treatment for, for example, 1 to 24 hours, or 2 to 12 hours.

In an exemplary embodiment, for the proper thermal curing of the above-mentioned monomers, the initiator may be a thermal initiator known to be usable for curing or crosslinking polymerization of a multifunctional monomer having a (meth)acrylate group, an alkoxylate group, a hydroxyl group, a cyano group, or a carboxylic acid group. Specific examples of such initiators include: peroxide initiators such as benzoyl peroxide, acetyl peroxide, dilauryl peroxide, di-tert-butyl peroxide, t-butyl peroxy-2-ethyl-hexanoate, cumyl hydroperoxide, or hydrogen peroxide; or 2,2'-azobis(2-cyanobutane), 2,2'-azobis(methylbutyronitrile), 2,2'-azobis(isobutyronitrile) (AIBN), 2,2'-azobisdimethyl-valeronitrile (AMVN), or the like. Two or more selected from them may be used together, or other various thermal initiators may be used.

**Lithium** secondary battery

In another aspect according to the present disclosure, a lithium secondary battery comprising the above-mentioned composite electrolyte is provided. The lithium secondary battery includes a positive electrode; a negative electrode; and the above-mentioned composite electrolyte membrane interposed between the positive electrode and the negative electrode, wherein the composite electrolyte membrane is coated onto the negative electrode, or is separably interposed between the positive electrode and the negative electrode.

According to more specific embodiments, the composite electrolyte membrane may be included in the form of an overcoating membrane coated and attached onto a positive electrode or a negative electrode, or may be manufactured in the form of a freestanding film, etc., and may be included in the form of an electrolyte membrane that is not attached to the positive electrode and negative electrode but is separably interposed between the positive electrode and the negative electrode.

Further, such an electrolyte membrane may be included alone, but in order to impart additional mechanical properties and insulation properties of the lithium secondary battery, the electrolyte membrane may further include a porous separation membrane interposed between the positive electrode and the negative electrode together with the electrolyte membrane, and the electrolyte membrane may be stacked on the porous separation membrane.

Meanwhile, in the lithium secondary battery of another embodiment, the positive electrode active material is not particularly limited as long as it is a material capable of reversibly intercalating and de-intercalating lithium ions, and examples thereof include a lithium metal composite oxide containing at least one metal element selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg and Mo.

More specifically, a compound represented by any one of the following formulas can be used as the positive electrode active material. $Li_aA_{1-b}R_bD_2$ (wherein, $0.90 \leq a \leq 1.8$ and $0 \leq b \leq 0.5$); $Li_aE_{1-b}R_bO_{2-c}D_c$ (wherein, $0.90 \leq a \leq 1.8$, $0 \leq b \leq 0.5$, and $0 \leq c \leq 0.05$); $LiE_{2-b}R_bO_{4-c}D_c$ (wherein, $0 \leq b \leq 0.5$, $0 \leq c \leq 0.05$); $Li_aNi_{1-b-c}Co_bR_cD_\alpha$ (wherein, $0.90 \leq a \leq 1.8$, $0 \leq b \leq 0.5$, $0 \leq c \leq 0.05$ and $0 < \alpha \leq 2$); $Li_aNi_{1-b-c}Co_bR_cO_{2-\alpha}Z_\alpha$ (wherein, $0.90 \leq a \leq 1.8$, $0 \leq b \leq 0.5$, $0 \leq c \leq 0.05$ and $0 < \alpha < 2$); $Li_aNi_{1-b-c}Co_bR_cO_{2-\alpha}Z_2$ (wherein, $0.90 \leq a \leq 1.8$, $0 \leq b \leq 0.5$, $0 \leq c \leq 0.05$ and $0 < \alpha < 2$); $Li_aNi_{1-b-c}Mn_bR_cD_\alpha$ (wherein, $0.90 \leq a \leq 1.8$, $0 \leq b \leq 0.5$, $0 \leq c \leq 0.05$ and $0 < \alpha \leq 2$); $Li_aNi_{1-b-c}Mn_bR_cO_{2-\alpha}Z_\alpha$ (wherein, $0.90 \leq a \leq 1.8$, $0 \leq b \leq 0.5$, $0 \leq c \leq 0.05$ and $0 < \alpha < 2$); $Li_aNi_{1-b-c}Mn_bR_cO_{2-\alpha}Z_2$ (wherein, $0.90 \leq a \leq 1.8$, $0 \leq b \leq 0.5$, $0 \leq c \leq 0.05$ and $0 < \alpha < 2$); $Li_aNi_bE_cG_dO_2$ (wherein, $0.90 \leq a \leq 1.8$, $0 \leq b \leq 0.9$, $0 \leq c \leq 0.5$ and $0.001 \leq d \leq 0.1$); $Li_aNi_bCo_cMn_dGeO_2$ (wherein, $0.90 \leq a \leq 1.8$, $0 \leq b \leq 0.9$, $0 \leq c \leq 0.5$, $0 \leq d \leq 0.5$ and $0.001 \leq e \leq 0.1$); $Li_aNiG_bO_2$ (wherein, $0.90 \leq a \leq 1.8$ and $0.001 \leq b \leq 0.1$); $Li_aCoG_bO_2$ (wherein, $0.90 \leq a \leq 1.8$ and $0.001 \leq b \leq 0.1$); $Li_aMnG_bO_2$ (wherein, $0.90 \leq a \leq 1.8$ and $0.001 \leq b \leq 0.1$); $Li_aMn_2G_bO_4$ (wherein, $0.90 \leq a \leq 1.8$ and $0.001 \leq b \leq 0.1$); $QO_2$; $QS_2$; $LiQS_2$; $V_2O_5$; $LiV_2O_5$; $LiTO_2$; $LiNiVO_4$; and $Li_{(3-f)}J_2(PO_4)_3 (0 \leq f \leq 2)$.

In the above formulas, A is Ni, Co, Mn or a combination thereof; R is Al, Ni, Co, Mn, Cr, Fe, Mg, V, or a combination thereof; D is O, F, S, P or a combination thereof; E is Co, Mn or a combination thereof; Z is F, S, P or a combination thereof; G is Al, Cr, Mn, Fe, Mg, La, Ce, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

In addition, the positive electrode may further include a binder and a conductive material in addition to the positive electrode active material described above. The binder is a component assisting in binding between the positive electrode active material and the conductive material, and in binding with the current collector. Examples of the binder may include at least one selected from the group consisting of polyvinylidene fluoride(PVdF), polyvinylidene fluoride-polyhexafluoropropylene copolymer(PVdF/HFP), polyvinyl acetate, polyvinyl alcohol, polyvinyl ether, polyethylene, polyethylene oxide, alkylated polyethylene oxide, polypropylene, polymethyl(meth)acrylate, polyethyl(meth)acrylate, polytetrafluoroethylene(PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer(EPDM) rubber, sulfonated EPDM rubber, styrene-butylene rubber, fluororubber, carboxymethylcellulose(CMC), starch, hydroxypropyl cellulose, regenerated cellulose, and mixtures thereof, but are not necessarily limited thereto.

The binder may be included in an amount of 1 to 50% by weight, or 3 to 15 parts by weight, based on 100 parts by weight of the total weight of the positive electrode. As a result, adhesion between the positive electrode active material and the current collector, and capacity characteristics of the secondary battery can be maintained excellently.

Further, the conductive material included in the positive electrode is not particularly limited as long as it does not cause side reactions in the internal environment of the lithium secondary battery and but has excellent electrical conductivity while not causing a chemical change in the battery. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may be included in an amount of 0.5 to 50 parts by weight, or 1 to 30 parts by weight, based on 100 parts by weight of the total weight of the positive electrode. Thereby, electrochemical properties such as conductivity and capacity of the positive electrode and lithium secondary battery can be maintained excellently.

In addition, a filler may be optionally added to the positive electrode as a component for inhibiting the expansion of the positive electrode. Such a filler is not particularly limited as long as it can inhibit the expansion of the electrode without causing chemical changes in the battery, and examples thereof may include olefinic polymers such as polyethylene and polypropylene; fibrous materials such as glass fibers and carbon fibers.

The above-mentioned positive electrode can be prepared, for example, by dispersing and mixing the positive electrode active material, the binder, the conductive material and the like in a dispersion medium (solvent) to form a slurry, and coating the slurry onto a positive electrode current collector, followed by drying and rolling. At this time, the dispersion medium may be NMP(N-methyl-2-pyrrolidone), DMF(dimethyl formamide), DMSO(dimethyl sulfoxide), ethanol, isopropanol, water, or a mixture thereof, but are not necessarily limited thereto.

Further, the positive electrode current collector may be platinum(Pt), gold(Au), palladium(Pd), iridium(Ir), silver(Ag), ruthenium(Ru), nickel(Ni), stainless steel(STS), aluminum(Al), molybdenum(Mo), chromium(Cr), carbon(C), titanium(Ti), tungsten(W), ITO(In doped $SnO_2$), FTO(F doped $SnO_2$), or an alloy thereof, or aluminum(Al) or stainless steel whose surface is treated with carbon(C), nickel(Ni), titanium(Ti) or silver(Ag), or the like, but is not necessarily limited thereto. The shape of the positive electrode current collector may be in the form of a foil, a film, a sheet, a punched form, a porous body, a foam or the like.

Further, in the lithium secondary battery of the other aspect described above, the negative electrode can be manufactured according to a conventional method known in the relevant technical field. For example, the negative electrode can be manufactured, for example, by dispersing and mixing the negative electrode active material, the conductive material, the binder and optionally the filler, etc. in a dispersion medium (solvent) to form a slurry, and coating the slurry onto a negative electrode current collector, followed by drying and rolling.

In this case, as the negative electrode active material, a compound capable of reversible intercalation and deintercalation of lithium can be used. Specific examples of the negative electrode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_\beta$ ($0 < \beta < 2$), $SnO_2$, vanadium oxide, and lithium vanadium oxide; a composite containing the metallic compound and the carbonaceous material, such as Si-C composite or Sn-C composite, and any one alone or a mixture of two or more thereof can be used. Further, a metallic lithium thin film may be used as the negative electrode active material. Additionally, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

Further, the binder and conductive material can be the same as those previously described for the positive electrode, and therefore, further description thereof will be omitted.

Further, the negative electrode current collector may be platinum(Pt), gold(Au), palladium(Pd), iridium(Ir), silver(Ag), ruthenium(Ru), nickel(Ni), stainless steel(STS), copper(Cu), molybdenum(Mo), chromium(Cr), carbon(C), titanium(Ti), tungsten(W), ITO(In doped $SnO_2$), FTO(F doped $SnO_2$), or an alloy thereof, or copper(Cu) or stainless steel whose surface is treated with carbon(C), nickel(Ni), titanium(Ti) or silver(Ag), or the like, but is not necessarily limited thereto. The shape of the negative electrode current collector may be in the form of a foil, a film, a sheet, a punched form, a porous body, a foam or the like.

Meanwhile, in the lithium secondary battery of the other embodiments, a composite electrolyte of one aspect may be interposed between the positive electrode and the negative electrode, for example, in the form of a membrane or film with a layered structure, as described above. In this case, the composite electrolyte membrane may also serve as a separation membrane (that is, it serves to electrically insulate the positive electrode and the negative electrode and simultaneously to allow lithium ions to pass through). At this time, the composite electrolyte membrane may be included in the secondary battery by being coated and attached to one surface of the positive electrode and the negative electrode in the form of a thin film. Further, the composite electrolyte membrane may be independently interposed between the positive electrode and the negative electrode. In addition, the lithium secondary battery of the other aspects may be a semi-solid battery that concurrently uses a liquid electrolyte and a solid electrolyte.

In addition, when a porous separation membrane is added in the lithium secondary battery, olefin-based polymers such as polyethylene and polypropylene, glass fibers or the like may be used in the form of sheets, multilayers, microporous films, woven fabrics, nonwoven fabrics or the like as the separation membrane, but are not necessarily limited thereto. However, it may be preferable to use a porous polyethylene or a porous glass fiber nonwoven fabric as the separation membrane, and it may be more desirable to apply porous glass fiber non-woven fabric as a separation membrane. The separation membrane may be an insulating thin film with high ion permeability and mechanical strength, and the pore diameter of the separation membrane may generally range from 0.01 to 10 $\mu$m, and the thickness thereof may generally range from 5 to 300 $\mu$m, but are not limited thereto.

Meanwhile, the lithium secondary battery of the other aspects may be manufactured according to a conventional method in the art. For example, the lithium secondary battery can be manufactured by forming a composite electrolyte membrane or the like between the positive electrode and the negative electrode, and optionally adding a porous separation membrane.

The lithium secondary battery is not only applicable to a battery cell used as a power source of a small device but also particularly suitably usable as a unit cell of a battery module which is a power source of a medium and large-sized device.

**[Advantageous Effects]**

As described above, the composite electrolyte membrane according to an aspect of the present disclosure can exhibit improved cation transference number characteristics as the particle size range and/or content range of the oxide nanoparticles are optimized.

In addition, since the liquid electrolyte is included in the crosslinked structure of the crosslinked polymer, it can exhibit excellent mechanical properties without a separate separation membrane, thereby minimizing the risk of fire caused by leakage of the liquid electrolyte, etc.

**[BRIEF DESCRIPTION OF THE DRAWINGS]**

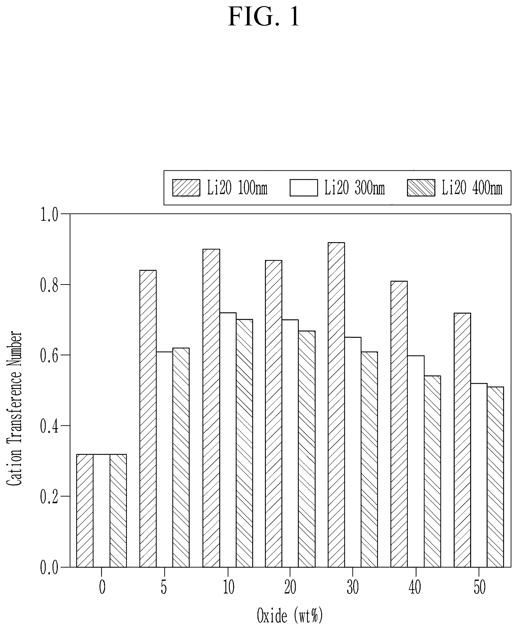

FIG. 1 shows a comparison of the measured cation transference numbers in the composite electrolyte membranes according to Comparative Examples and Examples of the present disclosure.

**[DETAILED DESCRIPTION OF THE EMBODIMENTS]**

Hereinafter, aspects of the present disclosure will be described so that those skilled in the art can easily carry out them. However, the present disclosure can be modified in various different ways, and is not limited to the aspects set forth herein.

**Comparative** Example 1: Manufacturing of composite electrolyte membrane (**Li$_2$O** 0 wt.%)

First, a mixed solvent of ethylene carbonate and propylene carbonate in a volume ratio of 1:1 was used as a non-aqueous organic solvent, and lithium salt $LiPF_6$ was dissolved in the solvent at a concentration of 1 M to form a liquid electrolyte. This liquid electrolyte was mixed with ethoxylated trimethylolpropane triacrylate(ETPTA) as a monomer having curable functional group in a weight ratio of 90:10, and 0.1 weight part of AIBN as a thermal initiator was further mixed with 100 weight parts of the mixture to prepare a composition for forming a composite electrolyte.

This composition was coated onto a PET substrate using a bar coater, and heat-treated at a temperature of 60°C for 360 minutes to perform thermal curing. Thereby, a composite electrolyte membrane of Comparative Example 1 formed on the substrate was manufactured.

Example 1: Manufacturing of composite electrolyte membrane (Li$_2$O 10 wt.%)

In the manufacturing method of Comparative Example 1 described above, similar process was carried out up to the mixing of the liquid electrolyte and the monomer having curable functional group. Additionally, 100 parts by weight of the mixture was mixed with 0.1 part by weight of AIBN as a thermal initiator, 10 wt.% of Li$_2$O oxide-based solid electrolyte particles having a particle size of 100 nm (Example 1-1) and 10 wt.% of Li$_2$O oxide-based solid electrolyte particles having a particle size of 300 nm (Example 1-2), respectively, to prepare a composition for forming a composite electrolyte.

The subsequent thermal curing process was carried out in the same manner as in Comparative Example 1 to manufacture a composite electrolyte of Example 1.

Example 2: Manufacturing of composite electrolyte membrane (Li$_2$O 20 wt.%)

A composite electrolyte membrane was manufactured in the same manner as in Example 1, except that 20 wt.% of Li$_2$O oxide-based solid electrolyte particles having a particle size of 100 nm (Example 2-1) and 20 wt.% of Li$_2$O oxide-based solid electrolyte particles having a particle size of 300 nm (Example 2-2) were used, respectively.

**Example 3: Manufacturing of composite electrolyte membrane (Li$_2$O 30 wt.%)**

A composite electrolyte membrane was manufactured in the same manner as in Example 1, except that 30 wt.% of Li$_2$O oxide-based solid electrolyte particles having a particle size of 100 nm (Example 3-1) and 30 wt.% of Li$_2$O oxide-based solid electrolyte particles having a particle size of 300 nm (Example 3-2) were used, respectively.

**Comparative Example 2: Manufacturing of composite electrolyte membrane (Li$_2$O 5 wt.%)**

A composite electrolyte membrane was manufactured in the same manner as in Example 1, except that 5 wt.% of Li$_2$O oxide-based solid electrolyte particles having a particle size of 100 nm (Comparative Example 2-1), 5 wt.% of Li$_2$O oxide-based solid electrolyte particles having a particle size of 300 nm (Comparative Example 2-2) and 5 wt.% of Li$_2$O oxide-based solid electrolyte particles having a particle size of 400 nm (Comparative Example 2-3) were used, respectively.

**Comparative Example 3-5: Manufacturing of composite electrolyte membrane (Li$_2$O 10~30 wt.%)**

A composite electrolyte membrane was manufactured in the same manner as in Example 1, except that 10 wt.% of Li$_2$O oxide-based solid electrolyte particles having a particle size of 400 nm (Comparative Example 3-3), 20 wt.% of Li$_2$O oxide-based solid electrolyte particles having a particle size of 400 nm (Comparative Example 4-3) and 30 wt.% of Li$_2$O oxide-based solid electrolyte particles having a particle size of 400 nm (Comparative Example 5-3) were used, respectively.

**Comparative Example 6: Manufacturing of composite electrolyte membrane (Li$_2$O 40 wt.%)**

A composite electrolyte membrane was manufactured in the same manner as in Example 1, except that 40 wt.% of Li$_2$O oxide-based solid electrolyte particles having a particle size of 100 nm (Comparative Example 6-1), 40 wt.% of Li$_2$O oxide-based solid electrolyte particles having a particle size of 300 nm (Comparative Example 6-2) and 40 wt.% of Li$_2$O oxide-based solid electrolyte particles having a particle size of 400 nm (Comparative Example 6-3) were used, respectively.

**Comparative Example 7: Manufacturing of composite electrolyte membrane (Li$_2$O 50 wt.%)**

A composite electrolyte membrane was manufactured in the same manner as in Example 1, except that 50 wt.% of Li$_2$O oxide-based solid electrolyte particles having a particle size of 100 nm (Comparative Example 7-1), 50 wt.% of Li$_2$O oxide-based solid electrolyte particles having a particle size of 300 nm (Comparative Example 7-2) and 50 wt.% of Li$_2$O

oxide-based solid electrolyte particles having a particle size of 400 nm (Comparative Example 7-3) were used, respectively.

**Battery Example: Manufacturing of lithium secondary battery**

First, lithium nickel cobalt manganese composite oxide (NCM 811) containing 80 mol% nickel among all the transition metals was used as a positive electrode active material. This positive electrode active material, carbon black as a conductive material, and polyvinylidene fluoride(PVdF) as a binder were mixed in a weight ratio of 96.5: 1.5: 2, and dispersed in an NMP solvent to prepare a slurry. The slurry was coated onto a 25 $\mu$m thick aluminum foil (Al foil) in a uniform thickness using a Mathis coater (Labdryer/coater type LTE, Werner Mathis AG), which is a blade-type coating machine, and dried in a vacuum oven at 120°C for 13 hours to manufacture a positive electrode for a lithium secondary battery.
A negative electrode for a lithium secondary battery was manufactured in the same manner as in the above positive electrode, using graphite as the negative electrode active material.
The positive electrode and the negative electrode were positioned so as to face each other, and the composite electrolyte membrane manufactured in Comparative Example 1-7 or Example 1-3 was interposed between them to manufacture an electrode assembly, and the electrode assembly was positioned inside a case to manufacture a lithium secondary battery.

**Experimental Example: Measurement of cation transference number**

The cation transference number of the manufactured lithium secondary battery was measured by the following method. First, voltage was applied to the manufactured lithium secondary battery to induce polarization in the electrodes, and then the current in the polarized state was measured. Based on the measured current value, the cation transference number (t+) was measured according to the following Mathematical Equation 1 based on Bruce-Vincent method.

$$[\text{Mathematical Equation 1}]$$
$$\text{t+} = \frac{I_{ss}(\Delta V - I_0 R_0)}{I_0(\Delta V - I_{ss} R_{ss})}$$

in the Mathematical Equation, $I_{ss}$ is the current value flowing in a steady state, $I_0$ is the current value flowing in a polarized state, $\triangle V$ is the potential difference applied to the entire cell, $R_0$ is the interface resistance in a polarized state, and $R_{ss}$ is the interface resistance in a steady state.
The cation transference numbers of the composite electrolyte membranes for lithium secondary batteries manufactured in Comparative Example 1-7 and Example 1-3 were measured, and the results are shown in Table 1 and FIG. 1 below.

[Table 1]

| Sample | Transference number (Li$_2$O 100 nm) | Sample | Transference number (Li$_2$O 300 nm) | Sample | Transference number (Li$_2$O 400 nm) |
|---|---|---|---|---|---|
| Comparative Example 1 (Li$_2$O 0 wt.% ) | 0.32 | Comparative Example 1 (Li$_2$O 0 wt.% ) | 0.32 | Comparative Example 1 (Li$_2$O 0 wt.% ) | 0.32 |
| Comparative Example 2-1 (Li$_2$O 5 wt.% ) | 0.84 | Comparative Example 2-2 (Li$_2$O 5 wt.% ) | 0.61 | Comparative Example 2-3 (Li$_2$O 5 wt.% ) | 0.62 |
| Example 1-1 (Li$_2$O 10 wt.% ) | 0.90 | Example 1-2 (Li$_2$O 10 wt.% ) | 0.72 | Comparative Example 3-3 (Li$_2$O 10 wt.% ) | 0.70 |
| Example 2-1 (Li$_2$O 20 wt.% ) | 0.87 | Example 2-2 (Li$_2$O 20 wt.% ) | 0.70 | Comparative Example 4-3 (Li$_2$O 20 wt.% ) | 0.67 |

(continued)

| Sample | Transference number (Li$_2$O 100 nm) | Sample | Transference number (Li$_2$O 300 nm) | Sample | Transference number (Li$_2$O 400 nm) |
|---|---|---|---|---|---|
| Example 3-1 (Li$_2$O 30 wt.% ) | 0.92 | Example 3-2 (Li$_2$O 30 wt.% ) | 0.65 | Comparative Example 5-3 (Li$_2$O 30 wt.% ) | 0.61 |
| Comparative Example 6-1 (Li$_2$O 40 wt.% ) | 0.81 | Comparative Example 6-2 (Li$_2$O 40 wt.% ) | 0.60 | Comparative Example 6-3 (Li$_2$O 40 wt.% ) | 0.54 |
| Comparative Example 7-1 (Li$_2$O 50 wt.% ) | 0.72 | Comparative Example 7-2 (Li$_2$O 50 wt.% ) | 0.52 | Comparative Example 7-3 (Li$_2$O 50 wt.% ) | 0.51 |

FIG. 1 shows a comparison of the measured cation transference numbers in the composite electrolyte membranes according to Comparative Examples and Examples of the present disclosure. Referring to Table 1 and FIG. 1, oxide-based particles were applied to the composite electrolyte membranes for lithium secondary batteries, under the conditions where the particle size of the oxide nanoparticles is particularly 300 nm or less, preferably 100 nm to 300 nm, and the oxide nanoparticles are contained in an amount of 10 to 30 wt.% based on the total weight of the composite electrolyte membrane, thereby capable of confirming the effect of improving the cation transference number.

Although the preferred aspect of the present disclosure has been described above, the present disclosure is not limited thereto, and various modifications and variations can be made without departing the sprit and scope of the claims, the detailed description and the accompanying drawings.

## Claims

1.  A composite electrolyte membrane comprising:

    a liquid electrolyte;
    a crosslinked polymer of a monomer having a curable functional group; and
    oxide nanoparticles dispersed in the crosslinked polymer and having a particle size of 300 nm or less,
    wherein the oxide nanoparticles include at least one of a lithium-containing oxide or a lithium-containing phosphate.

2.  The composite electrolyte membrane of claim 1, wherein:
    the lithium-containing oxide or the lithium-containing phosphate includes at least one of: Li$_2$O, an LAGP(lithium aluminum germanium phosphate)-based compound, an LLZO(lithium lanthanum zirconium oxide)-based compound, an LATP(lithium aluminum titanium phosphate)-based compound, an LLZTO(lithium lanthanum zirconium tantalum oxide)-based compound, or an LSTP(lithium silicon titanium phosphate)-based compound.

3.  The composite electrolyte membrane of claim 1, wherein:
    the oxide nanoparticles are included in an amount of from 5% to 50% by weight based on a total weight of the composite electrolyte membrane.

4.  The composite electrolyte membrane of claim 3, wherein:
    the oxide nanoparticles are included in an amount of from 10% to 30% by weight based on the total weight of the composite electrolyte membrane.

5.  The composite electrolyte membrane of claim 1, wherein:
    the oxide nanoparticles have a particle size of from 100 nm to 300 nm.

6.  The composite electrolyte membrane of claim 1, wherein:
    the monomer having the curable functional group is at least one of: ethylene glycol diacrylate, triethylene glycol diacrylate, ethoxylate trimethylolpropane triacrylate, bisphenol A ethoxylate dimethacrylate, acrylic acid, carboxyethylacrylate, methylcyanoacrylate, ethylcyanoacrylate, ethylcyano ethoxyacrylate, cyanoacrylic acid, hydroxyethyl methacrylate, or hydroxypropyl acrylate.

7. The composite electrolyte membrane of claim 1, wherein:
the crosslinked polymer is included in an amount of from 3% to 20% by weight based on a total weight of the composite electrolyte membrane.

8. A lithium secondary battery comprising:

a positive electrode; a negative electrode; and the composite electrolyte membrane of claim 1 interposed between the positive electrode and the negative electrode,
wherein the composite electrolyte membrane is coated onto the negative electrode, or the composite electrolyte membrane is separably interposed between the positive electrode and the negative electrode.

9. A method for manufacturing the composite electrolyte membrane of claim 1, the method comprising:

forming a composition on a substrate, the composition including: the liquid electrolyte, which includes a lithium salt; the monomer having the curable functional group; and the oxide nanoparticles; and
in the presence of an initiator, thermally curing the monomer having the curable functional group at a temperature of 60°C or more, or photocuring the monomer having the curable functional group under ultraviolet irradiation.

10. The method of claim 9, wherein:
the initiator is at least one of: benzoyl peroxide, acetyl peroxide, dilauryl peroxide, di-tert-butyl peroxide, t-butyl peroxy-2-ethyl-hexanoate, cumyl hydroperoxide, hydrogen peroxide, 2,2'-azobis(2-cyanobutane), 2,2'-azo-bis(methylbutyronitrile), 2,2'-azobis(isobutyronitrile)(AIBN) or 2,2'-azobisdimethyl-valeronitrile(AMVN).

# FIG. 1

## INTERNATIONAL SEARCH REPORT

| International application No. |
|---|
| **PCT/KR2024/011841** |

| A. | CLASSIFICATION OF SUBJECT MATTER |
|---|---|

**H01M 10/0568**(2010.01)i; **H01M 10/0567**(2010.01)i; **H01M 10/0525**(2010.01)i; **C08F 22/10**(2006.01)i;
**C08F 2/44**(2006.01)i; **C08K 3/22**(2006.01)i

According to International Patent Classification (IPC) or to both national classification and IPC

| B. | FIELDS SEARCHED |
|---|---|

Minimum documentation searched (classification system followed by classification symbols)

H01M 10/0568(2010.01); H01M 10/04(2006.01); H01M 10/052(2010.01); H01M 10/0525(2010.01);
H01M 10/0565(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 가교 단량체(crosslinking monomer), 액체 전해질(liquid electrolyte), 산화물 나노입자(oxide nanoparticles), 입경(particle size), 복합 전해질막 (composite electrolyte membrane)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2015-0129181 A (UNIST ACADEMY-INDUSTRY RESEARCH CORPORATION) 19 November 2015 (2015-11-19)<br>See paragraphs [0067], [0086], [0134], [0140], [0158], [0160], [0162], [0175] and [0176]; and claims 1, 2, 4, 10 and 28. | 1-10 |
| A | CN 112038694 A (ZHEJIANG UNIVERSITY) 04 December 2020 (2020-12-04)<br>See entire document. | 1-10 |
| A | US 2019-0379085 A1 (SOLID STATE BATTERY INCORPORATED) 12 December 2019 (2019-12-12)<br>See entire document. | 1-10 |
| A | KR 10-2020-0121748 A (SUMITOMO CHEMICAL CO., LTD.) 26 October 2020 (2020-10-26)<br>See entire document. | 1-10 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 November 2024** | **20 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 715 941 A1

## INTERNATIONAL SEARCH REPORT

**C.    DOCUMENTS CONSIDERED TO BE RELEVANT**

| Category* | Citation of document, with indication, where appropriate, of the relevant passages | Relevant to claim No. |
|---|---|---|
| A | US 2020-0365880 A1 (NANOTEK INSTRUMENTS, INC.) 19 November 2020 (2020-11-19)<br>See entire document. | 1-10 |

Form PCT/ISA/210 (second sheet) (July 2022)

**INTERNATIONAL SEARCH REPORT**
**Information on patent family members**

International application No.

**PCT/KR2024/011841**

| Patent document cited in search report | | | Publication date (day/month/year) | Patent family member(s) | | | Publication date (day/month/year) |
|---|---|---|---|---|---|---|---|
| KR | 10-2015-0129181 | A | 19 November 2015 | KR | 10-1612062 | B1 | 27 April 2016 |
| CN | 112038694 | A | 04 December 2020 | CN | 112038694 | B | 23 November 2021 |
| US | 2019-0379085 | A1 | 12 December 2019 | US | 11394056 | B2 | 19 July 2022 |
| KR | 10-2020-0121748 | A | 26 October 2020 | CN | 111834596 | A | 27 October 2020 |
| | | | | JP | 2020-177772 | A | 29 October 2020 |
| | | | | JP | 7228459 | B2 | 24 February 2023 |
| | | | | US | 11769909 | B2 | 26 September 2023 |
| | | | | US | 2020-0335820 | A1 | 22 October 2020 |
| US | 2020-0365880 | A1 | 19 November 2020 | US | 11302911 | B2 | 12 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230104172

- KR 1020240105886